# EUROPÄISCHE PATENTSCHRIFT

(11) **EP 2 044 868 B1**
(45) Veröffentlichungstag und Bekanntmachung des Hinweises auf die Patenterteilung: **03.08.2011**
(21) Anmeldenummer: 08105331.6
(22) Anmeldetag: 12.09.2008
(51) Int. Cl.: A47J 31/46, B05B 1/00

(54) **Heißwasserauslauf**
Hot water runoff
Évacuation d'eau chaude

(30) Priorität: 05.10.2007 DE 102007047649
(43) Veröffentlichungstag der Anmeldung: 08.04.2009
(73) Patentinhaber: BSH Bosch und Siemens Hausgeräte GmbH, 81739 München (DE)
(72) Erfinder: Aigner, Andreas, 83313 Siegsdorf (DE); Jaskolka, Robert, 83395 Freilassing (DE); Kramer, Siegmund, 83417 Kirchanschöring (DE)

(56) Entgegenhaltungen:
- WO-A-03/105644
- WO-A-2005/058109
- DE-C- 462 492
- DE-U1-202007 002 544
- GB-A- 618 762

## Beschreibung

Die Erfindung betrifft ein Gehäuse mit einem Leitungs- und Kammersystem zur Zubereitung von Milchschaum und mit einem integrierten Flüssigkeitsauslauf für einen Kaffeevollautomaten zur Anbringung an ein Abgaberohr für Flüssigkeiten, insbesondere heißes Wasser, mit einem Einlass zum Anschluss an das Abgaberohr und einer Auslassöffnung Der Flüssigkeitsauslauf wird insbesondere an einem Kaffeevollautomaten angeordnet. Weiterhin betrifft die Erfindung eine Kaffee-Zubereitungsmaschine mit einem solchen Heißwasserauslauf.

Derartige Flüssigkeitsausläufe werden an Kaffee-Zubereitungsmaschinen angebracht, um Nutzern zusätzliche Möglichkeiten zur Getränkezubereitung zu bieten. Sie ermöglichen zum Beispiel als Heißwasserspender die Zubereitung von Heißgetränken wie Tees oder Instant-Heißgetränken. Bisher wurden derartige Heißwasserausläufe üblicherweise mit der Düse eines Milchaufschäumers kombiniert. Sie befördern Flüssigkeiten unter einem relativ hohen Druck als Flüssigkeitsstrahl. Es gibt auch vergleichbare Ausführungen als Milchdüsen. Weil die Flüssigkeitsausläufe üblicherweise heißes Wasser spenden, ist nur der Einfachheit halber im Folgenden von Heißwasser als gespendeter Flüssigkeit die Rede.

Aus der DE 462 492 ist eine Austrittsdüse für Heißwasser bekannt, bei der Heißwasser mit verminderter Kraft austritt. Hierzu wird auf eine obere Düse eine zweite Düse aufgeschraubt, die eine bauchig ausgebildete Wandung aufweist. Auch mit dieser Vorrichtung kann die Gefahr nicht vollständig gebannt werden, dass Heißwasser zum Beispiel aus einer Tasse, die unter die Düse gehalten wird, herausspritzt und sich ein Benutzer verbrüht.

Aufgabe der Erfindung ist es, einen verbesserten Flüssigkeitsauslauf sowie eine entsprechende Kaffee-Zubereitungsmaschine bereitzustellen.

Diese Aufgabe wird bei dem eingangs genannten Gehäuse mit einem Leitungs- und Kammersystem zur Zubereitung von Milchschaum und mit einem integrierten Flüssigkeitsauslauf für einen Kaffeevollautomaten zur Anbringung an ein Abgaberohr für Flüssigkeiten, insbesondere heißes Wasser, mit einem Einlass zum Anschluss an das Abgaberohr und einer Auslassöffnung dadurch gelöst, dass im Weg des Heißwassers durch den Auslauf eine Entspannungskammer angeordnet ist. Sie ist derart ausgebildet, dass sie im Betrieb einen Flüssigkeitsdruck von einem Pumpdruck im Abgaberohr etwa auf Atmosphärendruck reduziert. Die Entspannungskammer sorgt also für eine weitgehende Druckentspannung des Heißwassers, so dass es zur Getränkezubereitung langsam fließend in ein Gefäß geleitet werden kann.

Grundsätzlich sind alle Innen-Geometrien von Entspannungskammern geeignet, die gewünschte Druckentspannung vom Pumpdruck auf etwa Atmosphärendruck herbeiführen. In einer bevorzugten Ausführungsform umfasst die Entspannungskammer einen Hohlraum, der in seinem Querschnitt mindestens in einem Bereich einen größeren Querschnitt aufweist als ein Öffnungsquerschnitt des Abgaberohrs. Das Heißwasser kann sich im Bereich der Querschnittsvergrößerung ausdehnen und verliert dadurch an Druck. Ist der Abschnitt des Hohlraums mit größerem Querschnitt lang bzw. die Querschnittsvergrößerung groß genug, so kann der Pumpdruck aufgrund der volumetrisch größeren Dimensionierung des Hohlraums im Vergleich zum Abgaberohr zuverlässig abgebaut werden. Unter anderem hat eine solche Volumenvergrößerung den Vorteil, dass mit einer einfachen Dimensionierungsmaßnahme der weitgehende Druckabbau erreicht werden kann. Da die Volumenvergrößerung nahezu beliebige räumliche Gestalt annehmen kann, kann die Entspannungskammer konstruktiv gut im Heißwasserauslauf integriert werden.

Neben der geeigneten Wahl des Innenquerschnitts der Entspannungskammer können weitere geometrische Gestaltungsmaßnahmen dem Beruhigen der Flüssigkeitsströmung, insbesondere dem Abbremsen des Heißwasserstrahls bzw. seiner Richtungsumlenkung dienen. So ist die Entspannungskammer vorzugsweise so dimensioniert, dass ein Heißwasserstrahl auf eine Wandung der Entspannungskammer trifft. Beispielsweise kann der Strahl gegen eine Wandung gelenkt werden, die der Öffnung des Abgaberohrs gegenüber liegt. Dadurch wird der Wasserstrahl abrupt abgebremst, wobei die als möglichst geschlossener Hohlraum gestaltete Entspannungskammer Wasserspritzer auffängt. Das Heißwasser wird auf der Unterseite der Entspannungskammer wie in einem kleinen Becken gesammelt und kann dann mit Atmosphärendruck durch die Auslassöffnung aus der Entspannungskammer fließen.

Prinzipiell ist vorstellbar, dass die Auslassöffnung auf einer Linie mit der Achse des Abgaberohrs liegt. Bevorzugt wird hingegen eine Anordnung, bei der die Auslauföffnung bezüglich der Achse des Abgaberohrs in einem Winkel kleiner 180° angeordnet ist. Damit das Heißwasser aus der Entspannungskammer durch die Auslauföffnung heraus fließen kann, erfährt es eine Richtungsumlenkung von der Strahlrichtung des Wasserstrahls - gleichzusetzen mit der Achse des Abgaberohrs - in eine andere, im Winkel dazu angeordnete Richtung. Beispielsweise kann das Heißwasser durch ein horizontal ausgerichtetes Abgaberohr in die Entspannungskammer geführt und vertikal aus einer Auslauföffnung abgeleitet werden. Vorteilhafterweise wird hierdurch unter anderem erreicht, dass der Wasserstrahl nicht ungebremst durch die Auslauföffnung hindurchstrahlen kann. Das Heißwasser kann dadurch ohne Spritzen gespendet werden.

Die bisher dargelegten Maßnahmen können jede für sich - und erst recht in Kombination miteinander - dazu führen, dass das Heißwasser vom Pumpdruck im Abgaberohr auf Atmosphärendruck gebracht wird. Bei ausreichender Dimensionierung des Hohlraums und immer wieder unterbrochenem Betrieb des Heißwasserauslaufs (wie üblicherweise bei Kaffee-Zubereitungsmaschinen der Fall) genügen diese Maßnahmen, um auch dann eine Druckentspannung zu gewährleisten, wenn der Querschnitt der Auslassöffnung - bei einer ausreichend großen Entspannungskammer als Sammelbecken - kleiner ist als der Querschnitt des Abgaberohrs. Bevorzugt hat jedoch die Auslassöffnung einen größeren Querschnitt als das Abgaberohr, vorzugsweise einen mindestens doppelt so großen Querschnitt. Dadurch kann vermieden werden, dass durch eine zu enge Auslassöffnung wieder Druck aufgebaut wird, bevor das Heißwasser aus der Entspannungskammer austreten kann. Je größer der Querschnitt der Auslassöffnung ist, desto besser kann dieser Gefahr begegnet werden. Einer überdimensionierten Auslassöffnung steht jedoch entgegen, dass die Entspannungskammer eine möglichst geschlossene Kammer, d. h. einen nach außen im Wesentlichen abgeschlossenen Hohlraum bilden soll, damit beispielsweise kein Spritzwasser, das bei der Druckentspannung in der Kammer entstehen kann, unkontrolliert nach außen dringt.

Grundsätzlich kann das Heißwasser aus der Auslassöffnung in der Entspannungskammer direkt in ein Trinkgefäß tropfen bzw. rinnen. Gemäß einer bevorzugten Ausführungsform ist an der Auslassöffnung zusätzlich ein Wasserauslaufrohr oder eine offene Wasserauslaufrinne angebracht. Sowohl ein Rohr als auch eine Rinne können das Heißwasser gezielt zum Trinkgefäß führen und der Überbrückung des Höhenunterschieds zwischen Auslassöffnung und Trinkgefäß dienen. Ein Wasserauslaufrohr leitet das heiße Wasser zuverlässig ohne Spritzer in das Trinkgefäß. Es dient also einer störungsfreien Wasserabgabe. Eine Wasserauslaufrinne kann gegenüber einem Wasserauslaufrohr einen ästhetischen Vorzug haben und ist leichter zu reinigen. Das Wasserauslaufrohr bzw. die -rinne kann lotrecht nach unten führen, aber auch aus Platzgründen schräg von der Kaffee-Zubereitungsmaschine weg angebracht sein, beispielsweise, um eine Tasse ungehindert unter die Mündung des Wasserauslaufrohrs bzw. der -rinne stellen zu können.

Besonders vorteilhaft ist eine Ausführung, bei der an der Mündung des Wasserauslaufrohrs bzw. der Wasserauslaufrinne eine Abrisskante angebracht ist. Abrisskanten vermeiden ein Hängenbleiben von Wassertropfen an der Kante des Rohrs oder der Rinne und zwingen sie zum Abtropfen.

Der Auslauf kann starr an einem Abgaberohr angebracht sein. Gemäß einer weiteren vorteilhaften Ausführungsform ist der Auslauf um die der Achse des Abgaberohrs und/oder um eine dazu rechtwinklig verlaufende Achse dreh- bzw. schwenkbar angeordnet.

Der Auslauf kann am Abgaberohr so angebracht sein, dass man ihn um die Längsachse des Abgaberohrs herum drehen kann. Statt einer Anbringung des Auslaufs am Abgaberohr mittels einer festen Verbindung oder einer einstückigen Ausführung von Auslauf und Abgaberohr bietet sich dann eine Ausführungsform mit einer Dichtung an, mit der der Auslauf auf dem Abgaberohr aufgesteckt ist. Dadurch kann der Auslauf problemlos und ohne Werkzeug abgenommen werden, wodurch sich seine Reinigung deutlich erleichtert. Außerdem kann der Auslauf als separates Ersatzteil vorgehalten werden, das der Nutzer ggf. selbst montieren kann.

Für eine schwenkbare Anordnung des Auslaufs, kann auch der Auslauf selbst ein Gelenk aufweisen. Eine dreh- und/oder schwenkbare Anordnung ist benutzerfreundlich, weil damit die Reichweite des Auslaufs variiert und dem jeweiligen Einsatzort des mit dem Auslauf verbundenen Geräts angepasst werden kann.

In einer einfachen Ausführungsform ist ein erfindungsgemäßer Auslauf ein eigenständiges Funktionsteil. Es kann vorteilhaft mit mindestens einer weiteren Vorrichtung zur Ab- und/oder Zuleitung von Flüssigkeiten und/oder Gasen kombiniert werden.

Beispielsweise kann durch einen weiteren Zulauf Milch zugeführt werden, so dass Heißwasser und Milch bereits im Auslauf gemischt werden können. Ein weiterer Ausgang kann zum Beispiel dazu dienen, Heißwasser mit unvermindertem Druck aus dem Auslauf abzugeben. Dazu kann ein Schaltventil vor der Entspannungskammer angeordnet sein, der das Heißwasser mit Pumpdruck durch einen Bypass leitet.

Sind sowohl zusätzliche Ab- als auch Zuleitungen integriert, können sie ein eigenständiges Leitungs- und ggf. Kammersystem bilden, das vollkommen unabhängig vom Leitungs- und Kammersystem des Auslaufs ist und nur in demselben Funktionsteil untergebracht ist. Beispielsweise können eine Milchschäum-Düsenvorrichtung und der drucklose Auslauf gemeinsam in einem Funktionsteil untergebracht sein. Bei all den beispielhaften Ausführungsvarianten sind für Heißwasser ähnliche Funktionen (Durchleiten, Aufheizen, Schäumen, etc. für Zusatzfunktionen der Heißgetränkezubereitung) in einem Funktionsteil benutzerfreundlich integriert.

Des Weiteren wird die eingangs genannte Aufgabe der Erfindung durch eine Kaffee-Zubereitungsmaschine mit einem erfindungsgemäßen Auslauf gelöst. Besonders geeignet ist die vorliegende Erfindung für Kaffee-Zubereitungsmaschinen, bei denen ohnehin ein zusätzlicher Auslauf, etwa in Form einer Dampfdüse zum Milchaufschäumen, vorgesehen ist.

Das Prinzip der Erfindung wird im Folgenden anhand der Figuren beispielshalber noch näher erläutert. Es zeigen:
- Figur 1: Eine Schnittdarstellung eines nicht erfindungsgemäßen Heißwasseraus- laufs,
- Figur 2: Eine Schnittdarstellung eines erfindungsgemäßen Heißwasserauslaufs,
- Figur 3: Eine schematische räumliche Darstellung eines nicht erfindungsgemäßen Heißwasserauslaufs.

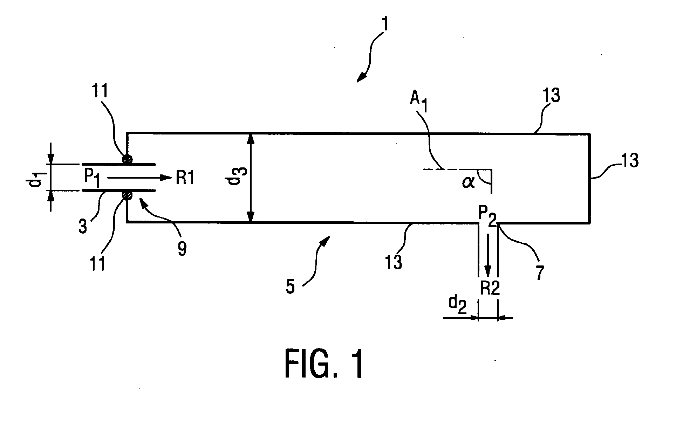

Figur 1 zeigt einen Heißwasserauslauf 1, der an einem Abgaberohr 3 mit Hilfe einer Dichtung 11 angebracht ist. Der Heißwasserauslauf 1 besteht im Wesentlichen aus einer Entspannungskammer 5, die einen Einlass 9, Wandungen 13 und eine Auslassöffnung 7 aufweist. Das Abgaberohr 3 hat einen Öffnungsquerschnitt d₁, die Auslassöffnung 7 einen Öffnungsquerschnitt d₂ und die Entspannungskammer 5 einen Querschnitt d₃. Dabei ist der Querschnitt d₃ der Entspannungskammer 5 deutlich größer ausgeführt als der Öffnungsquerschnitt d₁ des Abgaberohrs 3. Auch der Querschnitt d₂ der Auslassöffnung 7 ist größer als d₁. Als günstig hat sich eine Ausgestaltung erwiesen, bei der bei einem Auslaufrohr mit einer kreisrunden Öffnung mit 2 mm Durchmesser (Querschnitt ca. 3,14 mm²) eine Entspannungskammer eine Auslassöffnung mit einem Querschnitt von 16 mm², d. h. mit in einem ca. fünffach größeren Querschnitt aufweist.

Im Betrieb strahlt Heißwasser aus dem Abgaberohr 3 mit einem Pumpdruck P₁ in Richtung R₁ in die Entspannungskammer 5. Die Richtung R₁ liegt auf der Achse A1 des Abgaberohrs 3. Durch den größeren Querschnitt d₃ der Entspannungskammer 5 kann der Wasserstrahl in der Entspannungskammer 5 expandieren; sein Wasserdruck fällt ab. Zusätzlich erfährt der Wasserstrahl eine Richtungsumlenkung. Entweder trifft er auf den unteren Bereich der Wandung 13 oder prallt gegen den gegenüber dem Abgaberohr 3 gelegenen Bereich der Wandung 13 und wird abrupt umgelenkt. Am Ende seines Weges in der Entspannungskammer 5 fließt das Heißwasser mit einer Richtung R₂, die in einem 90°-Winkel α zu R₁ liegt, mit Atmosphärendruck P₂ durch die Auslassöffnung 7. Durch den größeren Öffnungsquerschnitt d₂ der Auslassöffnung 7 im Vergleich zum Öffnungsquerschnitt d₁ des Abgaberohrs 3 wird auch bei längerem Betrieb des Heißwasserauslaufs 1 in der Entspannungskammer 5 kein neuer Druck aufgebaut, weil immer genügend Heißwasser ablaufen kann.

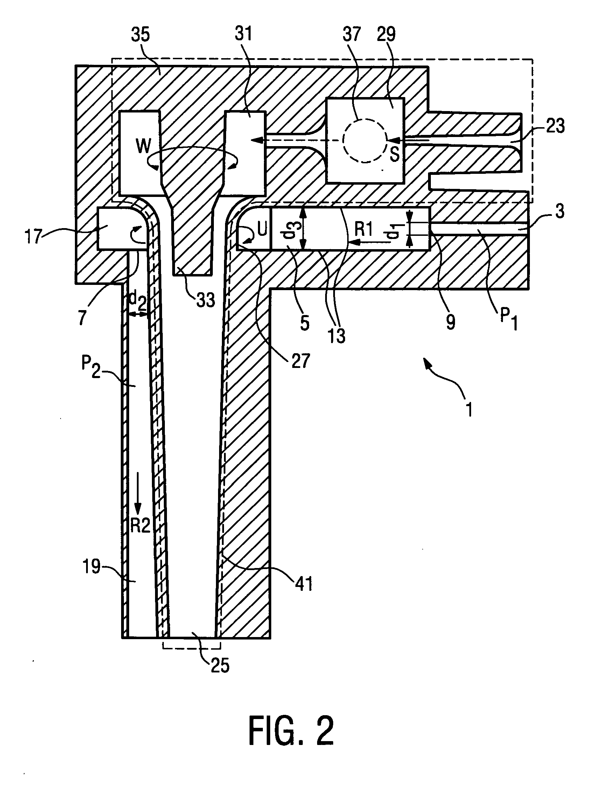

Figur 2 stellt eine spezielle Ausführungsform der Erfindung dar. Der Heißwasserauslauf 1 ist integriert in ein Gehäuse 35, das noch ein weiteres Leitungs- und Kammersystem 41 zur Zubereitung von Milchschaum aufweist. Über eine Vorrichtung zur Zuleitung 23 gelangt Wasserdampf in eine Mischkammer 29. Die Mischkammer 29 weist einen weiteren Anschluss 37 zur Zuführung von Milch auf. Dieser Anschluss 37 wird von der Seite, d. h. senkrecht zur Strahlrichtung S des Wasserdampfs bzw. senkrecht zur Darstellungsebene zugeführt (strichliert angedeutet). Das Gemisch aus Dampf und Milch gelangt in einen ringförmigen Verwirbelungsraum 31, in dem es um einen Zapfen 33 herum verwirbelt und dann vertikal durch einen Ableitungskanal 25 abgeführt wird.

Im selben Gehäuse 35 befindet sich ein Heißwasserauslauf 1 mit den in Figur 1 beschriebenen Elementen. Aus der Abgabeöffnung 3 wird Heißwasser in die Entspannungskammer 5 gepumpt und durch die Auslassöffnung 7 abgeleitet. Zusätzlich wird das Heißwasser an einer Prallwand 27 umgelenkt und fließt in einer ringförmigen Kammer 17 mit einer Umlenkströmung U um die Außenwand des Ableitungskanals 25. Unterhalb der Auslassöffnung 7 wird das Heißwasser durch ein Wasserauslaufrohr 19 abgeleitet. Das Abgaberohr 3 ist einstückig mit dem Heißwasserauslauf 1 ausgeführt.

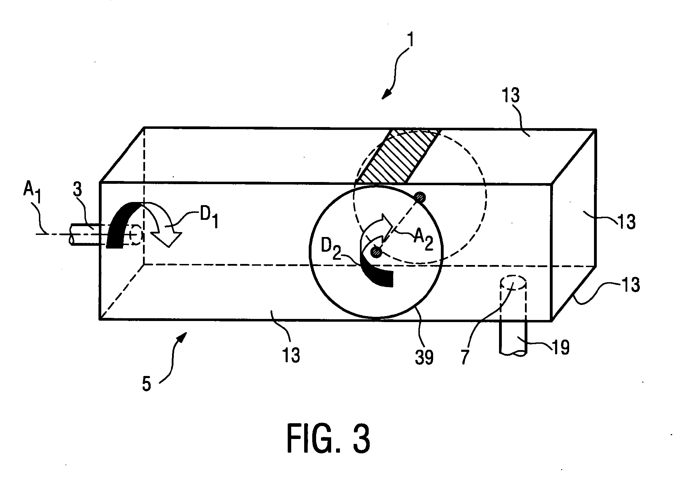

Figur 3 stellt schematisch einen nicht erfindungsgemäßen Heißwasserauslaufs dar. Neben den bekannten Elementen (speziell der Abgabeöffnung 3, der Entspannungskammer 5 und der Auslassöffnung 7) ist ein Drehgelenk 39 in der Entspannungskammer 5 vorgesehen, mit Hilfe dessen ein Teil des Heißwasserauslaufs 1 um eine Achse A₂ in einer Drehrichtung D₂ schwenkbar ist. Die Achse A₂ steht senkrecht zur Achse A₁ des Abgaberohrs. Die genaue Ausführung des Drehgelenks 39 ist in diesem Zusammenhang nicht dargestellt, doch es versteht sich, dass Drehgelenk 39 und Entspannungskammer 5 eine möglichst wasserdichte Einheit darstellen.

Der Heißwasserauslauf 1 ist zudem auf dem Abgaberohr 3 um dessen Achse A₁ in einer Drehrichtung D₁ drehbar gelagert. Durch diese Anordnung kann ein Benutzer den Heißwasserauslauf 1 so ausrichten, dass er bequem ein Trinkgefäß unter das Wasserauslaufrohr 19 positionieren kann.

## Patentansprüche

1. Gehäuse (35) mit einem Leitungs- und Kammersystem (41) zur Zubereitung von Milchschaum und mit einem integrierten Flüssigkeitsauslauf (1) für einen Kaffeevollautomaten zur Anbringung an ein Abgaberohr (3) für Flüssigkeiten (15), insbesondere heißes Wasser, mit einem Einlass (9) zum Anschluss an das Abgaberohr (3) und einer Auslaßöffnung (7), wobei der Flüssigkeitsauslauf (1) eine Entspannungskammer (5) umfasst, in der im Betrieb ein Flüssigkeitsdruck von einem Pumpdruck (P₁) im Abgaberohr (3) etwa auf Atmosphärendruck (P₂) reduzierbar ist.

2. Gehäuse (35) gemäß Anspruch 1, **dadurch gekennzeichnet, dass** die Entspannungskammer (5) einen Hohlraum umfasst, der in seinem Querschnitt (d₃) mindestens in einem Bereich einen größeren Querschnitt aufweist als der Öffnungsquerschnitt (d₁) des Abgaberohrs (3).

3. Gehäuse (35) gemäß einem der vorhergehenden Ansprüche, **dadurch gekennzeichnet, dass** die Entspannungskammer (5) so dimensioniert ist, dass ein Flüssigkeitsstrahl auf eine Wandung (13, 27) der Entspannungskammer (5) trifft.

4. Gehäuse (35) gemäß einem der vorhergehenden Ansprüche, **dadurch gekennzeichnet, dass** die Auslauföffnung (7) bezüglich der Achse (A1) des Abgaberohrs (3) in einem Winkel (α) angeordnet ist.

5. Gehäuse (35) gemäß einem der vorhergehenden Ansprüche, **dadurch gekennzeichnet, dass** die Auslassöffnung (7) einen größeren Querschnitt (d2) als das Abgaberohr (3) aufweist, vorzugsweise einen mindestens doppelt so großen Querschnitt.

6. Gehäuse (35) gemäß einem der vorhergehenden Ansprüche, **dadurch gekennzeichnet, dass** an der Auslassöffnung (7) ein Wasserauslaufrohr (19) oder eine offene Wasserauslaufrinne angebracht ist.

7. Gehäuse (35) gemäß Anspruch 6, **gekennzeichnet durch** eine Abrisskante an einem der Auslassöffnung (7) gegenüberliegenden Ende des Wasserauslaufrohrs (19) bzw. der Wasserauslaufrinne.

8. Gehäuse (35) gemäß einem der vorhergehenden Ansprüche, **dadurch gekennzeichnet, dass** der Flüssigkeitsauslauf (1) um die Achse (A₁) des Abgaberohrs (3) und/oder um eine dazu rechtwinklig verlaufenden Achse (A₂) schwenk- bzw. drehbar angeordnet ist.

9. Gehäuse (35) gemäß einem der vorhergehenden Ansprüche mit einer Dichtung (11) am Abgaberohr (3), **dadurch gekennzeichnet, dass** der Flüssigkeitsauslauf (1) mittels der Dichtung (11) auf das Abgaberohr (3) aufgesteckt ist.

10. Kaffee-Zubereitungsmaschine, **gekennzeichnet durch** ein Gehäuse (35) gemäß einem der Ansprüche 1 bis 9.

## Claims

1. Housing (35) with a conduit and chamber system (41) for preparation of milk foam and with an integrated liquid outlet (1) for a coffee machine for mounting on a delivery pipe (3) for liquids (15), particularly hot water, with an inlet (9) for connection with the delivery pipe (3) and a outlet opening (7), wherein the liquid outlet (1) comprises a pressure relief chamber (5) in which in operation a liquid pressure is reducible from a pumping pressure (P₁) in the delivery pipe (3) to approximately atmospheric pressure (P₂).

2. Housing (35) according to claim 1, **characterised in that** the pressure relief chamber (5) has a cavity which in the cross-section (d₃) thereof has at least in a region a larger cross-section than the opening cross-section (d₁) of the delivery pipe (3).

3. Housing (35) according to one of the preceding claims, **characterised in that** the pressure relief chamber (5) is so dimensioned that a liquid jet impinges on a wall (13, 27) of the pressure relief chamber (5).

4. Housing (35) according to any one of the preceding claims, **characterised in that** the outlet opening (7) is arranged at an angle (α) with respect to the axis (A₁) of the delivery pipe (3).

5. Housing (35) according to any one of the preceding claims, **characterised in that** the outlet opening (7) has a larger cross-section (d₂) than the delivery pipe (3), preferably a cross-section of at least twice the size.

6. Housing (35) according to any one of the preceding claims, **characterised in that** a water outlet pipe (19) or an open water outlet channel is mounted at the outlet opening (7).

7. Housing (35) according to claim 6, **characterised by** a flow separation edge at an end, which is opposite the outlet opening (7), of the water outlet pipe (19) or the water outlet channel.

8. Housing (35) according to any one of the preceding claims, **characterised in that** the liquid outlet (1) is arranged to be pivotable or rotatable about the axis (A₁) of the delivery pipe (3) and/or about an axis (A₂) extending at right angles thereto.

9. Housing (35) according to any one of the preceding claims, with a seal (11) at the delivery pipe (3), **characterised in that** the liquid outlet (1) is plugged by means of the seal (11) onto the delivery pipe (3).

10. Coffee machine **characterised by** housing (35) according to any one of claims 1 to 9.

## Revendications

1. Boîtier (35) comprenant un système de conduites et de chambres (41) pour la préparation de mousse de lait et comprenant une sortie de liquide intégrée (1) pour un distributeur de café automatique, destinée à être installée sur un tube de distribution (3) pour des liquides (15), notamment de l'eau chaude, comprenant une entrée (9) pour le raccordement au tube de distribution (3) et un orifice d'écoulement (7), la sortie de liquide (1) comprenant une chambre de détente (5) dans laquelle, pendant le fonctionnement, une pression de liquide peut être réduite d'une pression de pompe (P₁) dans le tube de distribution (3) à environ la pression atmosphérique (P₂).

2. Boîtier (35) selon la revendication 1, **caractérisé en ce que** la chambre de détente (5) comprend un espace creux qui présente dans sa section transversale (d₃), au moins dans une partie, une section plus grande que la section d'ouverture (d₁) du tube de distribution (3).

3. Boîtier (35) selon l'une quelconque des revendications précédentes, **caractérisé en ce que** la chambre de détente (5) est dimensionnée de manière à ce qu'un jet de liquide arrive sur une paroi (13, 27) de la chambre de détente (5).

4. Boîtier (35) selon l'une quelconque des revendications précédentes, **caractérisé en ce que** l'orifice d'écoulement (7) est disposé dans un angle (α) par rapport à l'axe (A1) du tube de distribution (3).

5. Boîtier (35) selon l'une quelconque des revendications précédentes, **caractérisé en ce que** l'orifice d'écoulement (7) présente une section (d2) plus grande que le tube de distribution (3), de préférence une section au moins deux fois plus grande.

6. Boîtier (35) selon l'une quelconque des revendications précédentes, **caractérisé en ce qu'**un tube d'évacuation d'eau (19) ou une rainure d'évacuation d'eau ouverte est installé sur l'orifice d'écoulement (7).

7. Boîtier (35) selon la revendication 6, **caractérisé par** un bord de décollement sur une extrémité, opposée à l'orifice d'écoulement (7), du tube d'évacuation d'eau (19) resp. de la rainure d'évacuation d'eau.

8. Boîtier (35) selon l'une quelconque des revendications précédentes, **caractérisé en ce que** la sortie de liquide (1) est disposée de manière pivotante resp. rotative autour de l'axe (A₁) du tube de distribution (3) et/ou autour d'un axe (A₂) s'étendant perpendiculairement au tube de distribution.

9. Boîtier (35) selon l'une quelconque des revendications précédentes comprenant un joint d'étanchéité (11) sur le tube de distribution (3), **caractérisé en ce que** la sortie de liquide (1) est emboîtée sur le tube de distribution (3) au moyen du joint d'étanchéité (11).

10. Machine de préparation de café, **caractérisée par** un boîtier (35) selon l'une quelconque des revendications 1 à 9.
